# EUROPÄISCHE PATENTSCHRIFT

(11) **EP 3 239 367 B1**
(45) Veröffentlichungstag und Bekanntmachung des Hinweises auf die Patenterteilung: **08.09.2021**
(21) Anmeldenummer: 17164893.4
(22) Anmeldetag: 05.04.2017
(51) Int. Cl.: D01G 7/06, D01G 31/00, F16P 3/14

(54) **VERFAHREN ZUM BETRIEB EINES BALLENÖFFNERS UND BALLENÖFFNER**
METHOD FOR OPERATING A BALE OPENER AND SUCH A BALE OPENER
PROCÉDÉ DE FONCTIONNEMENT D'UN BRISE-BALLES ET BRISE-BALLES

(30) Priorität: 15.04.2016 CH 4972016
(43) Veröffentlichungstag der Anmeldung: 01.11.2017
(73) Patentinhaber: Maschinenfabrik Rieter AG, 8406 Winterthur (CH)
(72) Erfinder: GSCHLIESSER, Gerhard, 8400 Winterthur (CH); SCHMID, Alexander, 8400 Winterthur (CH)

(56) Entgegenhaltungen:
- EP-A1- 0 379 465
- EP-A1- 1 598 792
- EP-A1- 2 395 274
- DE-U1-202013 005 503

## Beschreibung

### Technisches Gebiet

Die Erfindung bezieht sich auf ein Verfahren zum Betrieb eines Ballenöffners mit einem Abtragorgan und einer Schutzeinrichtung zum Schutz von Personen bei Eindringen in eine Gefahrenzone des Abtragorgans und einen Ballenöffner entsprechend dem Oberbegriff der unabhängigen Ansprüche.

### Stand der Technik

Es ist bekannt, bei Maschinen im Allgemeinen und auch bei Textilmaschinen die sich an der Maschine bewegenden Teile, insbesondere die Antriebsvorrichtungen, gegen ein Zunahekommen durch eine Schutzvorrichtung zu sichern. Soweit die Antriebsteile mit den beweglichen Teilen ortsfest angeordnet sind, genügt im Allgemeinen eine fest angebrachte Umkleidung. Diese kann so ausgebildet sein, dass beim Öffnen der Umkleidung die Maschine automatisch stillgesetzt wird.

In der Praxis sind Einrichtungen zur Absicherung gefährlicher Arbeitsorgane an Textilmaschinen, an so genannten Ballenfräsen, vorhanden. Im Bereich der Textilindustrie, insbesondere der Spinnereivorbereitung, sind Maschinen zum Abtragen von auf dem Boden stehenden Faserballen bekannt. Da die dabei verwendeten Arbeitsorgane, beispielsweise Fräswalzen, sich während des Betriebes systembedingt an sich ständig ändernden Positionen befinden und nicht abgedeckt werden können, stellen sie unter anderem für das die Maschinen bedienende Personal eine hohe Gefährdung dar. Daher werden die Arbeitsbereiche der Maschinen heute weiträumig durch entsprechende Einrichtungen, beispielsweise eine Vielzahl von Lichtschranken, abgesichert.

Bei kraftbetriebenen Textilmaschinen ist es beispielsweise bekannt, zur Überwachung und Sicherung von begehbaren Gefahrenbereichen vorzusehen, dass ein Sender und ein Empfänger derart räumlich zueinander angeordnet sind, so dass durch eine Unterbrechung des Strahlenganges zwischen Sender und Empfänger ein Signal ausgelöst wird, das zur unmittelbaren Unterbrechung der gefahrbringenden Bewegung der Textilmaschine verwendet wird (vgl. DE4234606A1). Hierzu ist es ferner bekannt, eine Ausschaltvorrichtung in Form einer Lichtschrankensicherung vorzusehen. Bei einem Ballenöffner für Textilfaserballen mit fahrbaren Abnahmeorganen und mehr als einem Gefahrenbereich sind der Sender und der Empfänger derart räumlich zueinander angeordnet, dass bei Arbeitsstellung des Abnahmeorgans der jeweils zugehörige Gefahrenbereich durch den Strahlengang zwischen Sender und Empfänger vollständig umschlossen wird. Eine solche Unterteilung der Lichtstrahl-Abschrankung erweist sich in der betrieblichen Praxis vielfach als umständlich. Beim Aufstellen einer neuen Ballenvorlage wird oft unbeabsichtigt die gegenüberliegende Sicherheitsabschrankung durchbrochen, wodurch die Maschine stillgesetzt wird. Eine Korrektur der Ballenaufstellung ist nur bei Unterbrechung des vollständigen Betriebes möglich. Es bestehen bei engen Raumverhältnissen Schwierigkeiten, die zu sichernden Gefahrenbereiche abzustecken.

Bei einer bekannten Vorrichtung in EP0379465A wird der problematische Gefahrenraum durch Sensoren und/oder mechanische Mittel abgeschirmt. Hierzu sind sensorische Schutzmittel vorgesehen, die ein Überwachungsgebiet seitlich unter und/oder stirnseitig unter oder direkt unter dem ortsveränderlichen Abtragorgan eines Ballenöffners erfassen. Durch eine Vielzahl von Sensoren, z.B. Infrarotsensoren, die mehr oder weniger rund um den Abnehmer angeordnet sind, wird eine Art von Schutzvorhang realisiert. Dieser soll so gesteuert werden, dass Faserballen nicht, dagegen eine eindringende Person erkannt wird. Alle Sensoren befinden sich an beweglichen Teilen, insbesondere dem Turm und dem Abnehmer, der Maschine, d.h. es besteht eine mechanische Verbindung (Kopplung) zwischen den Sensoren und der Maschine. Ein Nachteil besteht darin, dass die Sensoren bewegt werden müssen, um ortsveränderliche Schutzbereiche zu schaffen. Insbesondere stört, dass die Sensoren und Auswertesysteme an den bewegten Maschinen bzw. Maschinenteilen mit ganz erheblichen Erschütterungen befestigt sind, was zu Störungen und gefährlichen Ausfällen des Sicherheitssystems führt. Ein weiterer Nachteil besteht darin, dass die eingesetzten Ultraschallsensoren teuer sind und vor allem sehr anfällig bezüglich Lufteinflüssen, wie Luftschichten, Wind usw. Zudem ist der überwachte Bereich gering, sprich nicht optimal, vor allem bezüglich seitlicher Abdeckung.

DE 20 2013 005503 U1 offenbart eine Schutzvorrichtung für einen sich laufend verändernden Eingreifbereich an Maschinen und Anlagen.

EP 2395 274 A1 offenbart ein System und eine Verfahren, um dynamisch anpassbare Sicherheitszonen zu definieren.

EP 1 598 792 A1 offenbart ein Sicherheitssystem, das mit einer Infrarotkamera arbeitet.

### Darstellung der Erfindung

Der Erfindung liegt somit die Aufgabe zugrunde, ein Verfahren zum Betrieb eines Ballenöffners und einen Ballenöffner zu schaffen, die die Nachteile aus dem Stand der Technik vermeiden.

Der Erfindung liegt weiter die Aufgabe zugrunde, ein Verfahren zum Betrieb eines Ballenöffners und einen Ballenöffner zu schaffen, die störunanfälliger, zuverlässiger und billiger sind als die aus dem Stand der Technik angebotenen Verfahren und Systeme.

Der Erfindung liegt weiter die Aufgabe zugrunde, ein Verfahren zum Betrieb eines Ballenöffners und einen Ballenöffner zu schaffen, die beim Drehen des Abtragorgans als Kollisions-Überwachung einsetzbar sind.

Gelöst werden diese Aufgaben durch ein Verfahren und einen Ballenöffner entsprechend dem Oberbegriff der unabhängigen Ansprüche, welche dadurch gekennzeichnet sind, dass die Schutzeinrichtung mindestens ein zweidimensionaler Laserscanner ist, an dem mindestens ein einstellbarer und zeitlich veränderbarer Überwachungsbereich überwacht wird bzw. ist.

Gelöst werden diese Aufgaben zudem durch ein Computerprogrammprodukt, welches direkt in einen internen Speicher eines Ballenöffners geladen werden kann und Softwarecodeabschnitte umfasst, mit denen die Verfahrensschritte des erfindungsgemässen Verfahrens ausgeführt werden, wenn das Produkt auf dem Ballenöffner läuft.

Vorteilhafte Ausführungsformen der Erfindung sind Gegenstand der Unteransprüche.

Es können beispielsweise an dem zweidimensionalen Laserscanner verschiedene unabhängig einstellbare und zeitlich veränderbare Überwachungsbereiche redundant überwacht werden, so kann der zweidimensionale Laserscanner zum Beispiel mindestens zwei Überwachungsbereiche überwachen, wobei ein Überwachungsbereich bis zum Boden reicht und einen Bereich oberhalb des Bodens scannt, wobei sich dieser Überwachungsbereich mit zunehmender Tiefe des Abtragorgans verkleinert. In einer anderen Ausführungsform überwacht der zweidimensionale Laserscanner mindestens zwei Überwachungsbereiche in verschiedenen Schutzfeldern redundant, wobei die Schutzfelder der Überwachungsbereiche zu bestimmten Zeiten oder an bestimmten Orten während des Betriebs untereinander umgeschaltet werden.

Diese redundante Ausführung der Überwachung mit verschiedenen Schutzfeldern und Überwachungsbereichen dient der Sicherheit und Robustheit des Systems und insbesondere damit wird sichergestellt, dass ein Ausfall oder ein Fehlverhalten des Sensors einfach festgestellt werden kann. Der Ballenöffner wird dann gestoppt, sobald mindestens in einem Überwachungsbereich ein unvorhergesehenes Ereignis (z.B. der Arm einer Person, etc.) detektiert wird oder die Funktion mindestens eines Laserscanners nicht sichergestellt werden kann.

Die vorliegende Erfindung hat zusätzlich zahlreiche Vorteile, da der zweidimensionale Laserscanner sowohl beim Drehen des Abtragorgans am Ende einer Ballengruppe als Kollisions-Überwachung eingesetzt werden kann, als auch der seitliche Abstand des Abtragorgans bzw. des Ballenöffners deutlich verringert werden kann.

Vorteilhaft kann die Form des mindestens einen Überwachungsbereichs des Laserscanners eingestellt werden. Maschinenteile oder andere Gegenstände können auf diese Weise vorteilhafterweise ausgeblendet oder umgangen werden.

Weitere Vorteile der Erfindung sind anhand eines nachfolgend beschriebenen und gezeigten Ausführungsbeispiels zu entnehmen.

### Kurze Beschreibung der Figuren

Die Erfindung wird anhand der beigefügten Figuren näher erläutert, wobei
- **Fig. 1**: eine schematische Darstellung eines Ballenöffners zeigt;
- **Fig. 2**: die erfindungsgemässe Anordnung eines Abtragturms mit einer Laserscanner; und
- **Fig. 3a-c**: eine Ausführungsform einer Funktionsweise eines erfindungsgemässen Laserscanners;
darstellen. Es werden nur für die Erfindung wichtigen Merkmale dargestellt. Gleiche Bezugszeichen bezeichnen in unterschiedlichen Figuren gleiche Merkmale.

### Wege zur Ausführung der Erfindung

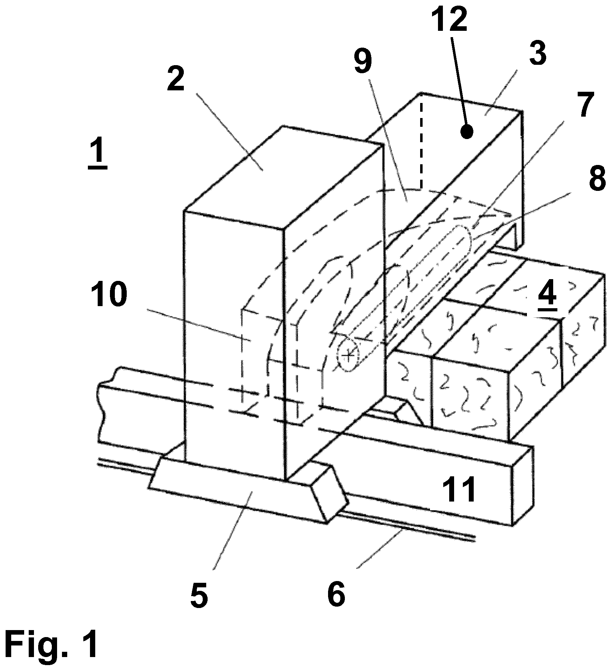

Figur 1 zeigt in einer schematischen Darstellung einen erfindungsgemässen Ballenöffner 1. Der Ballenöffner 1 besteht im Wesentlichen aus einem Abtragturm 2 und einem Abtragorgan 3. Das Abtragorgan 3 ist am Abtragturm 2 einseitig befestigt und frei auskragend über Faserballen 4 angeordnet. Der Abtragturm 2 ist mit einem Fahrwerk 5 ausgerüstet. Mit Hilfe des Fahrwerks 5 wird der Abtragturm 2 auf Schienen 6 entlang den Faserballen 4 bewegt. Durch diese Bewegung wird das am Abtragturm 2 angebrachte Abtragorgan 3 über die Oberfläche der unter ihm liegenden Faserballen 2 geführt. Die Befestigung des Abtragorgans 3 am Abtragturm 2 ist höhenverstellbar ausgeführt, so dass die Faserballen 4 kontinuierlich abgetragen werden können. Im Abtragorgan 3 ist eine Abtragwalze 7 mit einer Achse 8 angeordnet. Die Abtragwalze 7 entnimmt aus den Faserballen 4 Faserflocken. Die Faserflocken werden über eine Absaughaube 9 mittels Unterdruck von der Abtragwalze 7 abgenommen und zum Abtragturm 2 geführt. Im Abtragturm 2 ist ein Transportkanal 10 angeordnet, welcher die Faserflocken von der Absaughaube 9 übernimmt und einem pneumatischen Faserflocken-Transportsystem 11 zuführt. Der Transportkanal 10 und damit auch die Absaughaube 9 stehen unter einem bestimmten Unterdruck, der zur pneumatischen Förderung der Faserflocken zum Transportkanal 10 dient. Erfindungsgemäss ist stirnseitig am Abtragorgan ein zweidimensionaler Laserscanner 12 vorhanden. Der Laserscanner 12 tastet ihre Umgebung ab, indem sie einen Laserpuls aussenden. Trifft der Laserpuls auf ein Objekt, wird er an den Empfänger des Laserscanners 12 reflektiert.

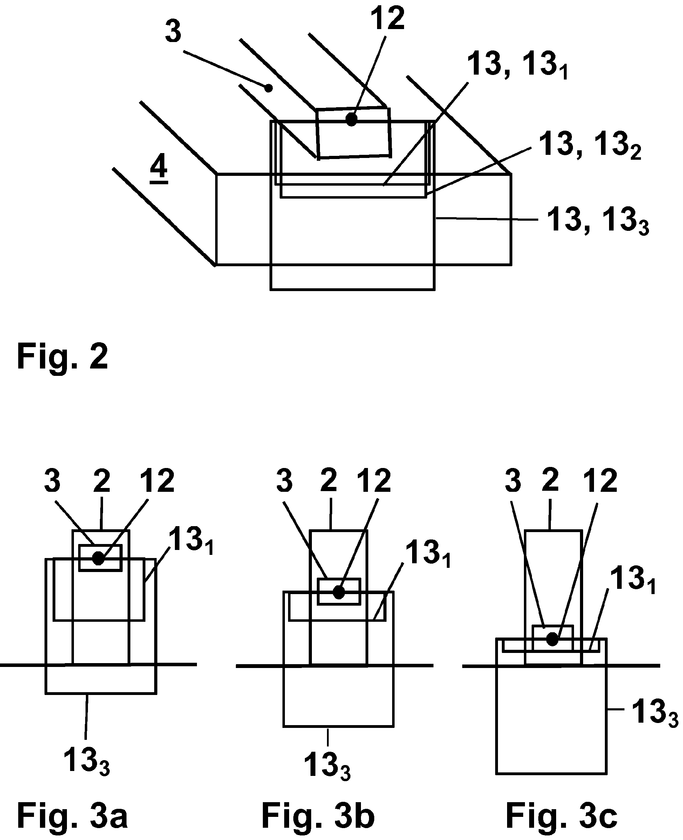

Fig. 2 zeigt die Draufsicht auf das Abtragorgan mit der Funktionsweise eines Laserscanners 12. Der Laserscanner 12 überwacht verschiedene unabhängig einstellbare und zeitlich veränderbare Überwachungsbereiche 13. Im dargestellten Beispiel gemäss Fig. 2 werden drei verschiedene Schutzfelder definiert, die drei voneinander unabhängige Überwachungsbereiche 13₁, 13₂, 13₃ bilden. Zwei dieser Schutzfelder werden so eingestellt, dass sie oberhalb des Bodens bleiben, aber tiefer als die Abtragwalze reichen. Diese redundante Überwachung dient zur Sicherheit des erfindungsgemässen Systems. Ein weiteres Schutzfeld scannt kontinuierlich den Boden. Der Ballenöffner 1 wird nun gestoppt, sobald mindestens ein Schutzfeld der ersten beiden ein Objekt (z.B. eine Person in der Nähe der Maschine, etc.) detektiert oder sobald das genannte Schutzfeld drei den Boden nicht mehr detektieren würde, weil beispielsweise der Laserscanner 12 ausgefallen ist. Da sich das Abtragorgan 3 nun im Laufe des Abtragens der Faserballen absenkt, muss der Überwachungsbereich 13₁, 13₂ der ersten beiden Schutzfelder mit zunehmender Tiefe des Abtragorgans 3 verkleinert werden. Nur so kann eine sichere Überwachung des Abtragorgans 3 sichergestellt werden.

Zur zusätzlichen Sicherheit können verschiedene Feldsätze definiert werden, in dem die definierten Überwachungsbereiche 13₁, 13₂, 13₃ beispielsweise invertiert oder anders verändert werden. Beispielsweise jedes Mal, wenn die Abtragwalze 7 nach einen Abtragdurchgang gestoppt oder zu anderen vordefinierten Zeitpunkten oder an vordefinierten Orten des Abtragorgans 3 wird, wird zudem der Sensor 12 selbst wie folgt überwacht: Es wird ein Feldsatz verwendet, bei welchem das Schutzfeld 1 und 2 den Boden sehen müssen (also ein Objekt, eine Person, etc.) und das Schutzfeld 3 den Boden nicht sehen darf (also kein Objekt). Entspricht ein Zustand nicht einem zu erwarteten Ergebnis, wird die Maschine gestoppt und ist nicht mehr startbereit. Danach wird der Feldsatz wieder auf Normalbetrieb (entsprechende der Höhe des Abtragorgans) umgeschaltet, und ebenfalls ausgewertet, ob diese korrekt sind.

Gleichzeitig ist es möglich, verschiedene Feldsätze mit unterschiedlich einstellbaren und zeitlich veränderbaren Überwachungsbereichen 13 zu definieren. Zwischen diesen Feldsätzen kann beliebig hin- und her geschaltet werden. Gleichzeitig kann bei dem Laserscanner 12 die Form des Scanfeldes ausgewählt werden, so zum Beispiel rechteckig, radial oder frei vom Benutzer definiert. Maschinenteile oder andere Gegenstände wie Maschinenverkleidungen, etc. können auf diese Weise vorteilhafterweise ausgeblendet oder umgangen werden.

Vorteilhaft kann seitlich ein viel besserer Bereich abgedeckt werden z.B. kann eine Person, mit aufliegendem Arm auf den Ballen rechtzeitig erfasst werden. Ein weiterer Vorteil ergibt sich dadurch, dass der zweidimensionale Laserscanner 12 beim Drehen des Abtragorgans 3 als Kollisions-Überwachung eingesetzt werden kann. Gleichzeitig kann der seitliche Abstand des Abtragorgans 3 bzw. des Ballenöffners 1 zum angrenzenden Gegenständen, Wänden, etc. deutlich verringert werden kann, da das Scanfeld senkrecht nach unten gehalten werden kann.

Vorteile des erfindungsgemässen Verfahrens ist, dass es billiger, zuverlässiger und störunanfälliger als aus dem Stand bekannte Lösungen ist.

Die Erfindung bezieht sich auch auf ein Computerprogrammprodukt, welches direkt in einen internen Speicher eines Ballenöffners geladen werden kann und Softwarecodeabschnitte umfasst, mit denen die Verfahrensschritte des erfindungsgemässen Verfahrens ausgeführt werden, wenn das Produkt auf dem Ballenöffner läuft.

### Bezugszeichenliste

- 1: Ballenöffner
- 2: Abtragturm
- 3: Abtragorgan
- 4: Faserballen
- 5: Fahrwerk
- 6: Schiene
- 7: Antragwalze
- 8: Achse
- 9: Absaughaube
- 10: Transportkanal
- 11: Transportsystem
- 12: Sensor, Laserscanner
- 13, 13₁, 13₂, 13₃: Überwachungsbereich

## Patentansprüche

1. Verfahren zum Betrieb eines Ballenöffners (1) mit einem Abtragorgan (3) und einer Schutzeinrichtung zum Schutz gegen ein Eindringen in eine Gefahrenzone des Abtragorgans (3), welche Schutzeinrichtung aus sensorischen Schutzmitteln besteht, wobei ein Überwachungsbereich (13) stirnseitig unter dem Abtragorgan erfasst wird, und wobei das Abtragorgan (3) an einem Abtragturm (2) befestigt ist,
**dadurch gekennzeichnet, dass**
die Schutzeinrichtung mindestens ein zweidimensionaler Laserscanner (12) ist, an dem mindestens ein einstellbarer und zeitlich veränderbarer Überwachungsbereich (13) überwacht wird, wobei der Laserscanner (12) eine zweidimensionale Ebene scannt.

2. Verfahren zum Betrieb eines Ballenöffners (1) nach Anspruch 1, **dadurch gekennzeichnet, dass** an dem zweidimensionalen Laserscanner (12) verschiedene unabhängig einstellbare und zeitlich veränderbare Überwachungsbereiche (13, 13₁, 13₂, 13₃) redundant überwacht werden.

3. Verfahren zum Betrieb eines Ballenöffners (1) nach Anspruch 1 oder 2, **dadurch gekennzeichnet, dass** der zweidimensionale Laserscanner (12) mindestens zwei Überwachungsbereiche (13, 13₁, 13₂, 13₃) überwacht, wobei ein Überwachungsbereich (13₃) bis zum Boden reicht und einen Bereich (13₁, 13₂) oberhalb des Bodens scannt, wobei sich dieser Überwachungsbereich (13₁, 13₂) mit zunehmender Tiefe des Abtragorgans verkleinert.

4. Verfahren zum Betrieb eines Ballenöffners (1) nach einem der Ansprüche 1 bis 3, **dadurch gekennzeichnet, dass** der zweidimensionale Laserscanner (12) mindestens zwei Überwachungsbereiche (13, 13₁, 13₂, 13₃) in verschiedenen Schutzfeldern redundant überwacht, und wobei die Schutzfelder der Überwachungsbereiche (13, 13₁, 13₂, 13₃) zu bestimmten Zeiten oder an bestimmten Orten während des Betriebs untereinander umgeschaltet werden.

5. Verfahren zum Betrieb eines Ballenöffners (1) nach einem der Ansprüche 1 bis 4, **dadurch gekennzeichnet, dass** der zweidimensionale Laserscanner (12) beim Drehen des Abtragorgans (3) am Ende einer Ballengruppe (4) als Kollisions-Überwachung eingesetzt wird.

6. Verfahren zum Betrieb eines Ballenöffners (1) nach einem der Ansprüche 1 bis 5, **dadurch gekennzeichnet, dass** die Form des mindestens einen Überwachungsbereichs (13, 13₁, 13₂, 13₃) des Laserscanners (12) eingestellt wird.

7. Verfahren zum Betrieb eines Ballenöffners (1) nach einem der Ansprüche 1 bis 6, **dadurch gekennzeichnet, dass** der Ballenöffner (1) gestoppt wird, sobald mindestens in einem Überwachungsbereich (13, 13₁, 13₂, 13₃) ein unvorhergesehenes Ereignis detektiert wird oder die Funktion mindestens eines Laserscanners (12) nicht sichergestellt ist.

8. Ballenöffner (1) mit einem internen Speicher, in den ein Computerprogrammprodukt direkt geladen werden kann, und mit einem Abtragorgan (3) und einer Schutzeinrichtung gegen ein Eindringen in eine Gefahrenzone des Abtragorgans (3), welche Schutzeinrichtung aus sensorischen Schutzmitteln besteht, die ein Überwachungsgebiet (13) stirnseitig unter dem Abtragorgan (3) erfassen, und wobei das Abtragorgan (3) an einem Abtragturm (2) befestigt ist,
**dadurch gekennzeichnet, dass**
die Schutzeinrichtung mindestens ein zweidimensionaler Laserscanner (12) ist, an dem mindestens ein einstellbarer und zeitlich veränderbarer Überwachungsbereich (13) vorhanden ist.

9. Ballenöffner (1) nach Anspruch 8 **dadurch gekennzeichnet, dass** an dem zweidimensionalen Laserscanner (12) verschiedene unabhängig einstellbare und zeitlich veränderbare Überwachungsbereiche (13, 13₁, 13₂, 13₃) redundant vorhanden sind.

10. Ballenöffner (1) nach Anspruch 8 oder 9, **dadurch gekennzeichnet, dass** durch den zweidimensionalen Laserscanner (12) mindestens zwei Überwachungsbereiche (13, 13₁, 13₂, 13₃) überwachbar sind, wobei ein Überwachungsbereich (13₃) bis zum Boden reicht und einen Bereich oberhalb des Bodens scannt, wobei dieser Überwachungsbereich (13₁, 13₂) mit zunehmender Tiefe verkleinert ist.

11. Ballenöffner (1) nach einem der Ansprüche 8 bis 10, **dadurch gekennzeichnet, dass** nach einen Abtragdurchgang durch den zweidimensionale Laserscanner (12) mindestens zwei Überwachungsbereiche (13, 13₁, 13₂, 13₃) in verschiedenen Schutzfeldern redundant überwachbar sind, und wobei die Schutzfelder der Überwachungsbereiche (13, 13₁, 13₂, 13₃) zu bestimmten Zeiten untereinander umgeschaltet sind.

12. Ballenöffner (1) nach einem der Ansprüche 8 bis 10, **dadurch gekennzeichnet, dass** die Form des mindestens einen Überwachungsbereichs (13, 13₁, 13₂, 13₃) des Laserscanners (12) einstellbar ist.

13. Ballenöffner (1) nach einem der Ansprüche 8 bis 12, **dadurch gekennzeichnet, dass** die Maschine gestoppt ist, sobald mindestens ein Überwachungsbereich (13, 13₁, 13₂, 13₃) ein unvorhergesehenes Ereignis detektiert oder die Funktion mindestens eines Laserscanners (12) nicht sichergestellt ist.

14. Computerprogrammprodukt, **dadurch gekennzeichnet, dass** es direkt in den internen Speicher eines Ballenöffners (1) gemäß einem der Ansprüche 8 bis 13 geladen werden kann und Softwarecodeabschnitte umfasst, mit denen die Verfahrensschritte gemäss einem der Ansprüche 1 bis 7 ausgeführt werden, wenn das Produkt auf dem Ballenöffner (1) läuft.

## Claims

1. A method for operating a bale opener (1) having a stripping element (3) and a safety device for protection against penetration into a hazardous zone of the stripping element (3), said safety device consisting of sensory safety means, wherein a monitoring region (13) at the front beneath the stripping element is detected and wherein the stripping element (3) is mounted on a stripping tower (2),
**characterized in that**
the safety device is at least one two-dimensional laser scanner (12) on which at least one monitoring region (13) which is adjustable and variable over time is monitored, whereas the laser scanner (12) scans a two-dimensional plane.

2. The method for operating a bale opener (1) according to claim 1,
**characterized in that** various monitoring regions (13, 13₁, 13₂, 13₃), which are independently adjustable and variable over time are monitored redundantly on the two-dimensional laser scanner (12).

3. The method for operating a bale opener (1) according to claim 1 or 2, **characterized in that** the two-dimensional laser scanner (12) monitors at least two monitoring regions (13, 13₁, 13₂, 13s) wherein one monitoring region (13₃) extends to the floor and scans a region (13₁, 13₂) above the floor, wherein this monitoring region (13₁, 13₂) becomes smaller with an increase in the depth of the stripping element.

4. The method for operating a bale opener (1) according to any one of claims 1 to 3,
**characterized in that** the two-dimensional laser scanner (12) monitors at least two monitoring regions (13, 13₁, 13₂, 13₃) in different safety fields and wherein the safety fields of the monitoring regions (13, 13₁, 13₂, 13₃) are switched among one another at certain times or at certain locations during operation.

5. The method for operating a bale opener (1) according to any one of claims 1 to 4,
**characterized in that** the two-dimensional laser scanner (12) is used as a collision monitor by rotating the stripping element (3) at the end of a group of bales (4).

6. The method for operating a bale opener (1) according to any one of claims 1 to 5,
**characterized in that** the shape of the at least one monitoring region (13, 13₁, 13₂, 13₃) of the laser scanner (12) is adjusted.

7. The method for operating a bale opener (1) according to any one of claims 1 to 6,
**characterized in that** the bale opener (1) is stopped as soon as an unforeseen event is detected in at least one monitoring region (13, 13₁, 13₂, 13₃) or the function of at least one laser scanner (12) is not ensured.

8. A bale opener (1) having an internal memory in that a computer program product can be loaded directly, and having a stripping element (3) and a safety device to prevent penetration into a hazardous zone of the stripping element (3), said safety device consisting of sensory safety means which detect a monitoring region (13) at the front beneath the stripping element (3) and wherein the stripping element (3) is mounted on a stripping tower (2), **characterized in that** the safety device is at least one two-dimensional laser scanner (12), on which there is at least one monitoring region (13) that is adjustable and variable over time.

9. The bale opener (1) according to claim 8, **characterized in that** various monitoring regions (13, 13₁, 13₂, 13₃), which are independently adjustable and variable over time, are present redundantly on the two-dimensional laser scanner (12).

10. The bale opener (1) according to claim 8 or 9, **characterized in that** at least two monitoring regions (13, 13₁, 13₂, 13₃) are monitorable by the two-dimensional laser scanner (12), wherein a monitoring region (13₃) extends to the floor and scans a region above the floor, wherein this monitoring region (13_{\1}, 13₂) becomes smaller with an increase in depth.

11. The bale opener (1) according to any one of claims 8 to 10, **characterized in that** after one stripping pass of, at least two monitoring regions (13, 13₁, 13₂, 13₃) in different safety fields are monitorable redundantly by the two-dimensional laser scanner (12), and wherein the safety fields of the monitoring regions (13, 13₁, 13₂, 13₃) are switched among one another at certain times.

12. The bale opener (1) according to any one of claims 8 to 10, **characterized in that** the shape of the at least one monitoring region (13, 13₁, 13₂, 13₃) of the laser scanner (12) is adjustable.

13. The bale opener (1) according to any one of claims 8 to 12, **characterized in that** the machine is stopped as soon as at least one monitoring region (13, 13₁, 13₂, 13₃) has detected an unforeseen event or the function of at least one laser scanner (12) is not ensured.

14. A computer program product, **characterized in that** it can be loaded directly into an internal memory of a bale opener (1) according to any one of claims 8 to 13 and comprises software code segments with which the process steps according to any one of claims 1 through 7 are carried out when the product runs on the bale opener (1).

## Revendications

1. Procédé permettant de faire fonctionner un ouvre-balles (1) comportant un élément de prélèvement (3) et un dispositif de protection permettant de protéger contre une pénétration dans une zone dangereuse de l'élément de prélèvement (3), lequel dispositif de protection est composé de moyens de protection sensoriels, une zone de surveillance (13) étant détectée côté frontal sous l'élément de prélèvement, et l'élément de prélèvement (3) étant fixé à une tour de prélèvement (2), **caractérisé en ce que**
le dispositif de protection est au moins un balayeur laser (12) bidimensionnel sur lequel au moins une zone de surveillance (13) réglable et variable dans le temps est surveillée, le balayeur laser (12) balayant un plan bidimensionnel.

2. Procédé permettant de faire fonctionner un ouvre-balles (1) selon la revendication 1, **caractérisé en ce que** différentes zones de surveillance (13, 13₁, 13₂, 13₃) réglables indépendamment et variables dans le temps sont surveillées de manière redondante sur le balayeur laser (12) bidimensionnel.

3. Procédé permettant de faire fonctionner un ouvre-balles (1) selon la revendication 1 ou 2, **caractérisé en ce que** le balayeur laser (12) bidimensionnel surveille au moins deux zones de surveillance (13, 13₁, 13₂, 13₃), une zone de surveillance (13₃) s'étendant jusqu'au sol et balayant une zone (13₁, 13₂) au-dessus du sol, ladite zone de surveillance (13₁, 13₂) diminuant au fur et à mesure que la profondeur de l'élément de prélèvement augmente.

4. Procédé permettant de faire fonctionner un ouvre-balles (1) selon l'une des revendications 1 à 3, **caractérisé en ce que** le balayeur laser (12) bidimensionnel surveille de manière redondante au moins deux zones de surveillance (13, 13₁, 13₂, 13₃) en différents champs de protection, et les champs de protection des zones de surveillance (13, 13₁, 13₂, 13₃) étant commutés entre eux à certains moments ou à certains endroits pendant le fonctionnement.

5. Procédé permettant de faire fonctionner un ouvre-balles (1) selon l'une des revendications 1 à 4, **caractérisé en ce que** le balayeur laser (12) bidimensionnel est utilisé comme surveillance de collision lorsque l'élément de prélèvement (3) est tourné à la fin d'un groupe de balles (4).

6. Procédé permettant de faire fonctionner un ouvre-balles (1) selon l'une des revendications 1 à 5, **caractérisé en ce que** la forme de l'au moins une zone de surveillance (13, 13₁, 13₂, 13s) du balayeur laser (12) est réglée.

7. Procédé permettant de faire fonctionner un ouvre-balles (1) selon l'une des revendications 1 à 6, **caractérisé en ce que** l'ouvre-balles (1) est arrêté dès qu'un événement imprévu est détecté dans au moins une zone de surveillance (13, 13₁, 13₂, 13₃) ou que la fonction d'au moins un balayeur laser (12) n'est pas assurée.

8. Ouvre-balles (1) comportant une mémoire interne dans laquelle un produit programme informatique peut être directement chargé, et comportant un élément de prélèvement (3) et un dispositif de protection contre une pénétration dans une zone dangereuse de l'élément de prélèvement (3), lequel dispositif de protection est composé de moyens de protection sensoriels couvrant une aire de surveillance (13) côté frontal sous l'élément de prélèvement (3), et l'élément de prélèvement (3) étant fixé à une tour de prélèvement (2), **caractérisé en ce que** le dispositif de protection est au moins un balayeur laser (12) bidimensionnel sur lequel au moins une zone de surveillance (13) réglable et variable dans le temps est présente.

9. Ouvre-balles (1) selon la revendication 8, **caractérisé en ce que** différentes zones de surveillance (13, 13₁, 13₂, 13₃) réglables indépendamment et variables dans le temps sont présentes de manière redondante sur le balayeur laser (12) bidimensionnel.

10. Ouvre-balles (1) selon la revendication 8 ou 9, **caractérisé en ce qu'**au moins deux zones de surveillance (13, 13₁, 13₂, 13₃) sont surveillées par le balayeur laser (12) bidimensionnel, une zone de surveillance (13a) s'étendant jusqu'au sol et balayant une zone au-dessus du sol, ladite zone de surveillance (13₁, 13₂) diminuant au fur et à mesure que la profondeur augmente.

11. Ouvre-balles (1) selon l'une des revendications 8 à 10, **caractérisé en ce qu'**après un passage de prélèvement par le balayeur laser (12) bidimensionnel, au moins deux zones de surveillance (13, 13₁, 13₂, 13₃) sont surveillées de manière redondante en différents champs de protection, et les champs de protection des zones de surveillance (13, 13₁, 13₂, 13₃) étant commutés entre eux à certains moments.

12. Ouvre-balles (1) selon l'une des revendications 8 à 10, **caractérisé en ce que** la forme de l'au moins une zone de surveillance (13, 13₁, 13₂, 13₃) du balayeur laser (12) est réglable.

13. Ouvre-balles (1) selon l'une des revendications 8 à 12, **caractérisé en ce que** la machine est arrêtée dès qu'au moins une zone de surveillance (13, 13₁, 13₂, 13₃) détecte un événement imprévu ou que la fonction d'au moins un balayeur laser (12) n'est pas assurée.

14. Produit programme informatique, **caractérisé en ce qu'**il peut être directement chargé dans la mémoire interne d'un ouvre-balles (1) selon l'une des revendications 8 à 13 et comprend des sections de code logiciel avec lesquelles les étapes de procédé selon l'une des revendications 1 à 7 sont mises en œuvre lorsque le produit est en route sur l'ouvre-balles (1).
